# EUROPÄISCHE PATENTSCHRIFT

(11) **EP 3 912 152 B1**
(45) Veröffentlichungstag und Bekanntmachung des Hinweises auf die Patenterteilung: **24.04.2024**
(21) Anmeldenummer: 19817235.5
(22) Anmeldetag: 05.12.2019
(51) Int. Cl.: G08G 1/16, B60W 50/14, G08G 1/0965, B60W 30/16

(54) **VERFAHREN ZUR ÜBERMITTLUNG EINER KOOPERATIONSBEREITSCHAFTSANZEIGE EINES MANUELL GEFAHRENEN KRAFTFAHRZEUGS AN EIN AUTONOM FAHRENDES KRAFTFAHRZEUG, COMPUTERPROGRAMMPRODUKT SOWIE KRAFTFAHRZEUG**
METHOD FOR TRANSMITTING AN INDICATION OF COOPERATIVENESS OF A MANUALLY DRIVEN MOTOR VEHICLE TO AN AUTONOMOUSLY DRIVING MOTOR VEHICLE, COMPUTER PROGRAM PRODUCT AND MOTOR VEHICLE
PROCÉDÉ POUR TRANSMETTRE UNE INDICATION DE DISPONIBILITÉ DE COOPÉRATION D'UN VÉHICULE AUTOMOBILE À CONDUITE MANUELLE À UN VÉHICULE AUTOMOBILE À CONDUITE AUTONOME, PRODUIT PROGRAMME D'ORDINATEUR ET VÉHICULE AUTOMOBILE

(30) Priorität: 14.01.2019 DE 102019200364
(43) Veröffentlichungstag der Anmeldung: 24.11.2021
(73) Patentinhaber: Stellantis Auto SAS, 78300 Poissy (FR)
(72) Erfinder: KNAPP, Steffen, 65428 Rüsselsheim am Main (DE); SCHMIDT, Gerald, 65428 Rüsselsheim am Main (DE)
(74) Vertreter: Spitzfaden, Ralf
(86) Internationale Anmeldenummer: PCT/EP2019/083846
(87) Internationale Veröffentlichungsnummer: WO 2020/148018

(56) Entgegenhaltungen:
- DE-A1-102014 000 843
- DE-A1-102016 205 140
- DE-A1-102016 205 142
- DE-A1-102016 205 972

## Beschreibung

Vorliegend werden ein Verfahren Übermittlung einer Kooperationsbereitschaftsanzeige eines manuell gefahrenen Kraftfahrzeugs an ein autonom fahrendes Kraftfahrzeug, ein Computerprogrammprodukt sowie ein Kraftfahrzeug beschrieben.

Es ist zu erwarten, dass zukünftig im Straßenverkehr sowohl autonom fahrende Kraftfahrzeuge als auch und von Menschen gefahrene Kraftfahrzeuge gemeinsam fahren werden. Ein solcher Verkehr wird üblicherweise als Mischverkehr bezeichnet. Das kooperative Fahren von autonom fahrenden und manuell, also von Menschen gefahrenen Kraftfahrzeugen stellt andere Herausforderungen an die Steuerung eines autonom fahrenden Kraftfahrzeugs als Situationen, in denen lediglich autonom fahrende Kraftfahrzeuge am Straßenverkehr teilnehmen. In letzterem Falle kann durch Kraftfahrzeug-zu Kraftfahrzeug-Kommunikation und gegebenenfalls durch Kraftfahrzeug-zu Umgebung-Kommunikation ein abgestimmtes Verhalten der Verkehrsteilnehmer erreicht werden.

Treffen jedoch im Mischverkehr autonom fahrende Kraftfahrzeuge auf manuell gefahrene Kraftfahrzeuge, muss das autonom fahrende Kraftfahrzeug versuchen, das Verhalten des manuell gefahrenen Kraftfahrzeugs bestmöglich vorherzusagen. Dies ist aber nicht immer möglich.

Es gibt Verkehrssituationen, in denen die Verkehrsteilnehmer kooperieren müssen, um den Verkehrsfluss am Laufen zu halten. Kooperation bedeutet zum Beispiel, dass ein Verkehrsteilnehmer freiwillig in einer Situation Platz macht, in der ein anderes Kraftfahrzeug ein für sich vorteilhaftes Manöver durchführen möchte, um keine Gefahrensituation hervorzurufen. Ein denkbares Beispiel ist etwa, dass ein autonom fahrendes Kraftfahrzeug einen Spurwechsel vollziehen möchte oder muss und ein anderer Verkehrsteilnehmer eine Lücke freimacht, damit dem die Spur wechselnden, autonom gefahrenen Kraftfahrzeug genug Platz für den Spurwechsel zur Verfügung steht, z.B. bei einer Situation, in der zwei Spuren im Reißverschlussverfahren zu einer Spur zusammengeführt werden. Ist eine solche Kooperation nicht erkennbar, muss das autonom fahrende Kraftfahrzeug aus Sicherheitsgründen vom Spurwechsel absehen, was gegebenenfalls andere Risiken mit sich bringt, zum Beispiel durch ein möglicherweise notwendiges hartes Abbremsen.

Die Herausforderungen der Kommunikation zwischen autonom fahrenden Kraftfahrzeugen und Fahrern von manuell gefahrenen Kraftfahrzeugen sind im Allgemeinen bekannt. Eine bekannte Lösung ist es, vom autonom fahrenden Kraftfahrzeug eine Kooperationsanfrage an den Fahrer des manuell gefahrenen Kraftfahrzeugs zu senden und nur dann einen Spurwechsel zu vollziehen, wenn der Fahrer des manuell gefahrenen Kraftfahrzeugs zum Beispiel durch Betätigung eines dafür vorgesehenen Knopfes im Cockpit seine Kooperationsbereitschaft signalisiert, die dann an das autonom fahrende Kraftfahrzeug zurückgesendet wird.

So beschreibt die DE 10 2016 205 142 A1 ein entsprechendes Verfahren zum Initiieren eines kooperativen Fahrmanövers, wobei ein zumindest teilautonom fahrendes Fahrzeug eine Fahrintentionsnachricht mit einer Information über ein beabsichtigtes Fahrmanöver mittels Fahrzeug-zu-Fahrzeug-Nachricht in einer Umgebung bereitstellt. Ferner kann von dem Fahrzeug eine einer Nachricht über ein Akzeptieren des kooperativen Fahrmanövers, als Antwort auf die Fahrintentionsnachricht, von einem weiteren Fahrzeug aus der Umgebung empfangen werden. Das weitere Fahrzeug kann ein manuell gefahrenes Kraftfahrzeug sein, das eine Bestätigung durch einen Fahrer einholt, bevor eine Nachricht über ein Akzeptieren des kooperativen Fahrmanövers mittels Fahrzeug-zu-Fahrzeug-Nachricht versentet wird.

Eine zu beantwortende Kooperationsanfrage führt jedoch gegebenenfalls zur Ablenkung des Fahrers des manuell gefahrenen Kraftfahrzeugs. Zudem ist davon auszugehen, dass ein nicht zu vernachlässigender Prozentsatz an Fahrern trotz Kooperationswillen nicht richtig und/oder nicht rechtzeitig reagiert, was dazu führt, dass das autonom fahrende Kraftfahrzeug eine alternative Strategie verwenden muss.

Somit stellt sich die Aufgabe, Verfahren zur Übermittlung einer Kooperationsbereitschaftsanzeige eines manuell gefahrenen Kraftfahrzeugs an ein autonom fahrendes Kraftfahrzeug, Computerprogrammprodukte sowie Kraftfahrzeuge der eingangs genannten Art dahingehend weiterzubilden, dass eine Kooperationsbereitschaftsanzeige eines manuell gefahrenen Kraftfahrzeugs zuverlässiger und mit weniger Interaktion mit dem Fahrer eines zur Durchführung eines Fahrmanövers zu senden.

Die Aufgabe wird gelöst durch ein Verfahren zur Steuerung eines autonom fahrenden Kraftfahrzeugs gemäß Anspruch 1, ein Computerprogrammprodukt gemäß dem nebengeordneten Anspruch 11 sowie durch ein Kraftfahrzeug gemäß dem nebengeordneten Anspruch 12. Weiterführende Ausgestaltungen und Weiterbildungen sind Gegenstand der abhängigen Ansprüche.

Nachfolgend wird ein Verfahren zur Übermittlung einer Kooperationsbereitschaftsanzeige eines manuell gefahrenen Kraftfahrzeugs an ein autonom fahrendes Kraftfahrzeug beschrieben, wobei das manuell gefahrene Kraftfahrzeug nach Empfangen einer vom autonom fahrenden Kraftfahrzeug über ein Kraftfahrzeug-zu-Kraftfahrzeug-Netzwerk gesendeten Kooperationsanfrage in einem ersten Schritt einen ersten Zeitabstand zwischen dem manuell gefahrenen Kraftfahrzeug und einem vorausfahrenden Kraftfahrzeug ermittelt und. Sofern der gemessene erste Zeitabstand gleich oder größer als ein erster Schwellwert ist, wird in einem zweiten Schritt ein zweiter Zeitabstand zum autonom fahrenden Kraftfahrzeug zu einem zu erwartenden Zeitpunkt des vollzogenen Fahrmanövers des autonom fahrenden Kraftfahrzeugs prognostiziert. Das manuell gefahrene Kraftfahrzeug sendet die Kooperationsbereitschaftsanzeige über das Kraftfahrzeug-zu-Kraftfahrzeug-Netzwerk an das autonom fahrende Kraftfahrzeug, wenn der zweite Zeitabstand gleich oder größer als ein zweiter Schwellwert ist.

Durch das Verfahren wird erreicht, dass ein Fahrer eines entsprechenden manuell gefahrenen Kraftfahrzeuges, das eine Kooperationsanfrage erhält, nicht mehr manuell separat eine Kooperationsbereitschaftsanzeige senden muss, es reicht aus, wenn er sich entsprechend kooperativ verhält. Des Weiteren kann verschiedenen Verkehrsumständen Rechnung getragen werden, unter anderem der zu erwartenden Zeit, bis das autonom fahrende Kraftfahrzeug sein Fahrmanöver vollzogen haben wird, möglicher Geschwindigkeitsunterschiede zwischen den beteiligten Verkehrsteilnehmern und dem dann zu erwartenden Abstand zum vorausfahrenden autonom fahrenden Kraftfahrzeug.

In einer ersten weiterführenden Ausgestaltung kann vorgesehen sein, dass der zweite Schwellwert über ein individuelles Fahrprofil des manuell gefahrenen Kraftfahrzeugs bestimmt wird, in dem während eines zeitlich vorausgegangenen Fahrverlaufs erfasste und gemittelte Zeitabstände zur vorausfahrenden Fahrzeugen berücksichtigt werden.

Durch diese Ausgestaltung kann das individuelle Sicherheitsbedürfnis eines Fahrers des manuell gefahrenen Kraftfahrzeuges hinsichtlich eines Sicherheitsabstandes nach einem erfolgreichen vollzogen Fahrmanöver des autonom fahrenden Kraftfahrzeugs bei der Entscheidung über eine Kooperationsbereitschaft berücksichtigt werden. Wurden zum Beispiel innerhalb eines zeitlich vorausgegangenen Fahrverlaufs große Zeitabstände im Vergleich zu dem gesetzlich vorgeschriebenen Sicherheitsabstand gefahren, so kann ein entsprechend großer Wert für den zweiten Schwellwert herangezogen werden.

Alternativ oder zusätzlich kann ein minimaler gesetzlich vorgeschriebener Sicherheitsabstand als zweiter Schwellwert herangezogen werden.

In einer anderen weiterführenden Ausgestaltung kann vorgesehen sein, dass sich der erste Schwellwert sich aus dem zweifachen des zweiten Schwellwerts zuzüglich einer Fahrzeuglänge des autonom fahrenden Kraftfahrzeugs ergibt. Die Fahrzeuglänge des autonom fahrenden Kraftfahrzeugs kann gemessen, abgeschätzt oder vom autonom fahrenden Kraftfahrzeug übermittelt werden.

In einer anderen weiterführenden Ausgestaltung kann vorgesehen sein, dass, wenn der erste Zeitabstand zum vorausfahrenden Kraftfahrzeug und/oder der prognostizierte zweite Zeitabstand zum autonom fahrenden Kraftfahrzeug kleiner als der entsprechende erste oder zweite Schwellwert ist, eine Gaspedalstellung und/oder Bremspedalstellung des manuell gefahrenen Kraftfahrzeugs gemessen wird. Das manuell gefahrene Kraftfahrzeug führt bei kleiner werdender Gaspedalstellung und/oder Betätigung des Bremspedals des manuell gefahrenen Kraftfahrzeugs jenseits eines dritten Schwellwerts das Verfahren ab dem ersten Schritt erneut durch. So kann geprüft werden, ob durch die durch Wegnahme von Gas oder durch Bremsen bewirkte Verlangsamung des manuell gefahrenen Kraftfahrzeugs der erste und zweite Schwellwert erreicht wird.

Der dritte Schwellwert kann von den Umständen abhängen, insbesondere der notwendigen Verzögerung des manuell gefahrenen Kraftfahrzeugs zum Herstellen des zweiten Schwellwerts zum Zeitpunkt des durchgeführten Fahrmanövers. Eine kleiner werdende Gaspedalstellung oder eine Betätigung des Bremspedals lassen darauf schließen, dass der Fahrer des manuell gefahrenen Kraftfahrzeugs den Zeitabstand zum vorausfahrenden Kraftfahrzeug erhöhen will, um ausreichend Platz für das autonom fahrende Kraftfahrzeug zu schaffen. Gaspedalstellung und Bremspedalstellung können sehr präzise gemessen werden.

In einer anderen weiterführenden Ausgestaltung kann vorgesehen sein, dass die Kooperationsanfrage im manuell gefahrenen Kraftfahrzeug signalisiert wird. Das Signalisieren kann beispielsweise durch ein optisches oder akustisches Signal erfolgen. Ein akustisches Signal kann beispielsweise ein Ton, eine Tonfolge oder ein Sprachhinweis sein, ein optisches Signal eine Warnung im Cockpit oder in einem Head-up-Display. Die Kooperationsanfrage kann Informationen zur Art des geplanten Fahrmanövers enthalten. Dies kann dem Fahrer zusätzlich zu anderen wahrnehmbaren Signalen, beispielsweise einem gesetzten Blinker, das geplante Fahrmanöver wahrnehmen kann, was dem Fahrer des manuell gefahrenen Kraftfahrzeugs ggf. mehr Zeit und mehr Sicherheit zur angemessenen Reaktion und zur Kooperation gibt.

In einer anderen weiterführenden Ausgestaltung kann vorgesehen sein, dass es sich bei dem Fahrmanöver um einen Spurwechsel des autonom fahrenden Kraftfahrzeugs von einer Ausgangsspur zu einer Zielspur handelt, wobei das manuell gefahrene Kraftfahrzeug sich schräg hinter dem autonom fahrenden Kraftfahrzeug auf der Zielspur befindet. Auf diese Weise kann sichergestellt werden, dass durch das autonom fahrende Kraftfahrzeug nur dann einen Spurwechsel vollzieht, wenn dies ohne Risiko für andere Verkehrsteilnehmer möglich ist.

In einer alternativen Ausgestaltung kann vorgesehen sein, dass es sich bei dem Fahrmanöver um ein Einmünden des autonom fahrenden Kraftfahrzeugs in eine Kreuzung oder einen Kreisverkehr handelt, wobei das manuell gefahrene Kraftfahrzeug sich auf der Zielstraße oder der in dem Kreisverkehr befindet.

In einer anderen weiterführenden Ausgestaltung kann vorgesehen sein, dass die jeweiligen Schwellwerte geschwindigkeitsabhängig sind. Bei größeren Geschwindigkeiten kann es angemessen sein, die Schwellwerte für die Zeitabstände anzupassen, um mögliche Unterschiede in der Bremsleistung der jeweiligen Kraftfahrzeuge zu kompensieren.

In einer anderen weiterführenden Ausgestaltung kann vorgesehen sein, dass das manuell gefahrene Kraftfahrzeug einen Knopf aufweist, um die Kooperationsbereitschaftsanzeige zu senden.

Ein erster unabhängiger Gegenstand betrifft ein System zur Übermittlung einer Kooperationsbereitschaftsanzeige eines manuell gefahrenen Kraftfahrzeugs an ein autonom fahrendes Kraftfahrzeug, wobei ein Empfänger zum Empfangen einer Kooperationsanfrage des autonom fahrenden Kraftfahrzeugs vorgesehen ist, wobei wenigstens ein Sensor zur anschließenden Messung von wenigstens einem Zeitabstand zwischen dem manuell gefahrenen Kraftfahrzeug und einem vorausfahrenden Kraftfahrzeug und/oder dem autonom fahrenden Kraftfahrzeug vorgesehen ist, wobei das manuell gefahrene Kraftfahrzeug einen Sender zum Senden der Kooperationsbereitschaftsanzeige an das autonom fahrende Kraftfahrzeug aufweist, wobei eine Recheneinheit vorgesehen ist, die dazu eingerichtet ist, in einem ersten Schritt den gemessenen ersten Zeitabstand zum vorausfahrenden Kraftfahrzeug mit einem ersten Schwellwert zu vergleichen und, sofern der gemessene erste Zeitabstand gleich oder größer dem ersten Schwellwert ist, in einem zweiten Schritt einen zweiten Zeitabstand zum autonom fahrenden Kraftfahrzeug zu einem zu erwartenden Zeitpunkt des vollzogenen Fahrmanövers des autonom fahrenden Kraftfahrzeugs zu prognostizieren, wobei die Recheneinheit dazu eingerichtet ist, die Kooperationsbereitschaftsanzeige an das autonom fahrende Kraftfahrzeug zu senden, wenn der zweite Zeitabstand gleich oder größer als ein zweiter Schwellwert ist. Das System kann in dem manuell gefahrenen Kraftfahrzeug verbaut sein.

In einer ersten weiterführenden Ausgestaltung kann vorgesehen sein, dass das System dazu eingerichtet ist, den zweiten Schwellwert über ein individuelles Fahrprofil des manuell gefahrenen Kraftfahrzeugs zu bestimmen, in dem während eines zeitlich vorausgegangenen Fahrverlaufs erfasste und gemittelte Zeitabstände zur vorausfahrenden Fahrzeugen berücksichtigt werden.

In einer anderen weiterführenden Ausgestaltung kann vorgesehen sein, dass das manuell gefahrene Kraftfahrzeug eine Signalisierungseinrichtung zum Anzeigen der Kooperationsanfrage des autonom fahrenden Kraftfahrzeugs aufweist. Eine solche Signalisierungseinrichtung kann beispielsweise durch ein Display und/oder Lautsprecher angegeben werden.

Eine darüber hinausgehende Ausgestaltung kann vorsehen, dass manuell gefahrene Kraftfahrzeug wenigstens einen Sensor zur Messung der Gaspedalstellung und/oder wenigstens einen Sensor zur Messung der Bremspedalstellung aufweist, wobei die Recheneinheit dazu eingerichtet ist, bei Überschreiten eines Schwellwertes Z der Gaspedal- oder Bremspedalstellung das Verfahren ab dem ersten Schritt erneut durchzuführen.

Eine andere weiterführende Ausgestaltung kann vorsehen, dass der wenigstens eine Sensor zum Messen des Zeitabstands zwischen dem manuell gefahrenen Kraftfahrzeug an einem vorderen Ende des manuell gefahrenen Kraftfahrzeugs angeordnet ist, wobei der Sensor dazu eingerichtet ist, den Abstand zu einem hinteren Ende des autonom fahrenden Kraftfahrzeugs zu messen. Solche Sensoren können beispielsweise als Ultraschall-, Radar-, Lidar- oder Kamera-Sensoren ausgebildet sein.

Das manuell gefahrene Kraftfahrzeug weist eine Kommunikationseinheit auf, die zur Kommunikation mit dem autonom fahrenden Kraftfahrzeug über ein Kraftfahrzeug-zu-Kraftfahrzeug-Netzwerk ausgebildet ist.

Eine darüber hinausgehende weiterführende Ausgestaltung kann vorsehen, dass die jeweiligen Schwellwerte geschwindigkeitsabhängig sind, wobei die Recheneinheit mit einer Geschwindigkeitsmessvorrichtung des Kraftfahrzeugs verbunden ist.

Eine weiterführende Ausgestaltung kann vorsehen, dass das manuell gefahrene Kraftfahrzeug einen Knopf aufweist, um die Kooperationsbereitschaftsanzeige zu senden.

Ein weiterer unabhängiger Gegenstand betrifft ein Computerprogrammprodukt mit einem computerlesbaren Speichermedium, auf dem Befehle eingebettet sind, die, wenn sie von einer Recheneinheit ausgeführt werden, bewirken, dass die Recheneinheit dazu eingerichtet ist, das zuvor beschriebenen Verfahren auszuführen.

Ein weiterer unabhängiger Gegenstand betrifft ein Kraftfahrzeug mit einer Recheneinheit und einem computerlesbaren Speichermedium, wobei auf dem Speichermedium ein einem Computerprogrammprodukt der zuvor beschriebenen Art gespeichert ist.

Weitere Merkmale und Einzelheiten ergeben sich aus der nachfolgenden Beschreibung, in der - gegebenenfalls unter Bezug auf die Zeichnung - zumindest ein Ausführungsbeispiel im Einzelnen beschrieben ist. Beschriebene und/oder bildlich dargestellte Merkmale bilden für sich oder in beliebiger, sinnvoller Kombination den Gegenstand.

Gleiche, ähnliche und/oder funktionsgleiche Teile sind mit gleichen Bezugszeichen versehen. Dabei zeigen schematisch:
- Fig. 1: eine Verkehrssituation mit mehreren Fahrzeugen, von denen eines einen Spurwechsel vollziehen möchte;
- Fig. 2: ein manuell gefahrenes Kraftfahrzeug, sowie
- Fig. 3: ein Ablaufdiagramm des Verfahrens.

Im nachfolgenden Ausführungsbeispiel wird ein Spurwechsel eines autonom fahrenden Kraftfahrzeugs von einer Ausgangsspur auf eine Zielspur dargestellt, auf dem wenigstens ein Kraftfahrzeug zum Spurwechsel verzögern muss, um ausreichend Platz zu schaffen. Andere Situationen können beispielsweise das Abbiegen an einer Kreuzung oder das Einfahren in einen Kreisverkehr sein.

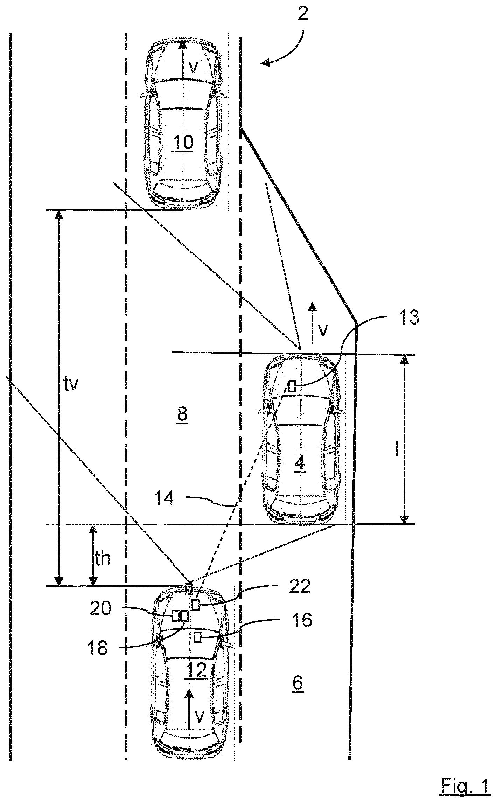

Fig. 1 zeigt eine Verkehrssituation auf einer Straße 2 mit einem autonom fahrenden Kraftfahrzeug 4, das von einer Ausgangsspur 6 auf eine Zielspur 8 zu wechseln plant.

Auf der Zielspur 8 befindet sich ein versetzt vor dem autonom fahrenden Kraftfahrzeug 4 fahrendes Kraftfahrzeug 10 und ein versetzt hinter dem autonom fahrenden Kraftfahrzeug 4 fahrendes Kraftfahrzeug 12. Das Kraftfahrzeug 12 ist manuell gesteuert.

Das autonom fahrende Kraftfahrzeug 4 muss in der vorliegenden Verkehrssituation prüfen, ob ein Wechsel von der Ausgangsspur 6 auf die Zielspur 8 möglich ist. Teil dieser Prüfung ist, festzustellen, ob ausreichend Platz für das autonom fahrende Kraftfahrzeug 4 auf der Zielspur 8 vorhanden ist. Ein anderer Teil der Prüfung ist, festzustellen, ob durch den Spurwechsel eine Verkehrssituation entsteht, in eines oder beide der Kraftfahrzeuge 10, 12 nebst dem autonom fahrenden Kraftfahrzeug 4 selbst möglicherweise durch Unterschreiten von Sicherheitsabständen gefährdet sind. Dies bedeutet, dass nach dem Spurwechsel des autonom fahrenden Kraftfahrzeugs 4 die Abstände zwischen den Kraftfahrzeugen 4 und 10 einerseits und 4 und 12 andererseits ausreichend groß sein müssen, um den jeweiligen Sicherheitsanforderungen zu genügen.

Die einzuhaltenden Sicherheitsabstände werden definiert durch Reaktionszeiten ("Schrecksekunde") sowie zusätzliche Puffer für möglicherweise unterschiedlich starke negative Beschleunigungen der Kraftfahrzeuge und werden daher als Zeitabstand angegeben. Vorliegend fahren die drei Kraftfahrzeuge 4, 10, 12 im Wesentlichen mit der gleichen Geschwindigkeit v. Die einzuhaltenden Sicherheitsabstände werden als Schwellwerte behandelt.

Das autonom fahrende Kraftfahrzeug 4 analysiert im vorliegenden Fall die Verkehrssituation und kommt zu der Erkenntnis, dass der geplante Spurwechsel zu einer Unterschreitung der Sicherheitsabstände führen würde und sendet mittels einer Sende-Empfangs-Einheit 13 über ein Kraftfahrzeug-zu-Kraftfahrzeug-Netzwerk 14 eine Kooperationsanfrage an das hinten fahrende Kraftfahrzeug 12. Die Kooperationsanfrage wird dem Fahrer des hinten fahrenden Kraftfahrzeugs 12 über eine optische Anzeige 16, die beispielsweise im Armaturenbrett des hinten fahrenden Kraftfahrzeugs 12 angeordnet sein kann, zur Kenntnis gebracht.

In Folge der Kooperationsanfrage misst das hinten fahrende Kraftfahrzeug 12 einen Zeitabstand th von einem vorderen Ende des hinten fahrenden Kraftfahrzeugs 12 zu einem hinteren Ende des autonom fahrenden Kraftfahrzeugs 4. Dabei stellt das hinten fahrende Kraftfahrzeug 12 fest, dass ein einen Mindestsicherheitsabstand definierender Schwellwert unterschritten ist. Der Mindestsicherheitsabstand und damit der Schwellwert sind geschwindigkeitsabhängig.

Das hinten fahrende Kraftfahrzeug 12 misst des Weiteren einen Zeitabstand tv von einem vorderen Ende des hinten fahrenden Kraftfahrzeugs 12 zu einem hinteren Ende des vorne fahrenden Kraftfahrzeugs 10. Das hinten fahrende Kraftfahrzeug 12 stellt dabei fest, dass der Zeitabstand tv zu klein ist, d. h. dass der gemessene Zeitabstand tv kleiner ist als ein Schwellwert.

Der Schwellwert für den Zeitabstand tv definiert sich aus dem zweifachen des Schwellwerts für den Zeitabstand th zuzüglich der Länge l des autonom fahrenden Kraftfahrzeugs 4.

Die Länge des autonom fahrenden Kraftfahrzeugs 4 kann je nach Ausführungsform entweder von der entsprechenden Sensorik des hinten fahrenden Kraftfahrzeugs 12 gemessen oder vom autonom fahrenden Kraftfahrzeug 4 übermittelt werden oder anhand des Fahrzeugtyps des autonom fahrenden Kraftfahrzeugs 4 (z.B. PKW, Kleinlaster oder LKW) abgeschätzt werden.

Das hinten fahrende Kraftfahrzeug 12 überwacht nun die Reaktion seines Fahrers auf die Kooperationsanfrage. Hierzu werden mittels eines Gaspedalsensors 18 und eines Bremspedalsensors 19 überwacht, ob der Fahrer vom Gas geht und ggf. auf die Bremse tritt, um den Abstand zum vorne fahrenden Kraftfahrzeug 10 derart zu vergrößern, dass das autonom fahrende Kraftfahrzeug 4 einscheren kann. Dabei erstellt das hinten fahrende Kraftfahrzeug 12 eine Prognose darüber, ob zum Zeitpunkt des Einscherens des autonom fahrenden Kraftfahrzeugs 4 der Schwellwert für den Zeitabstand erreicht oder überschritten sein wird oder nicht. Ist er überschritten, sendet das hinten fahrende Kraftfahrzeug 12 eine Kooperationsbereitschaftsanzeige an das autonom fahrende Kraftfahrzeug 4, ohne dass der Fahrer des hinten fahrenden Kraftfahrzeugs 12 anderweitig aktiv werden muss, z.B. durch Drücken einer entsprechenden Taste.

Eine solche Taste kann in manchen Ausführungsformen noch vorgesehen sein, wodurch die Zuverlässigkeit einer bestehenden Kooperationsbereitschaftsanzeige erhöht wird.

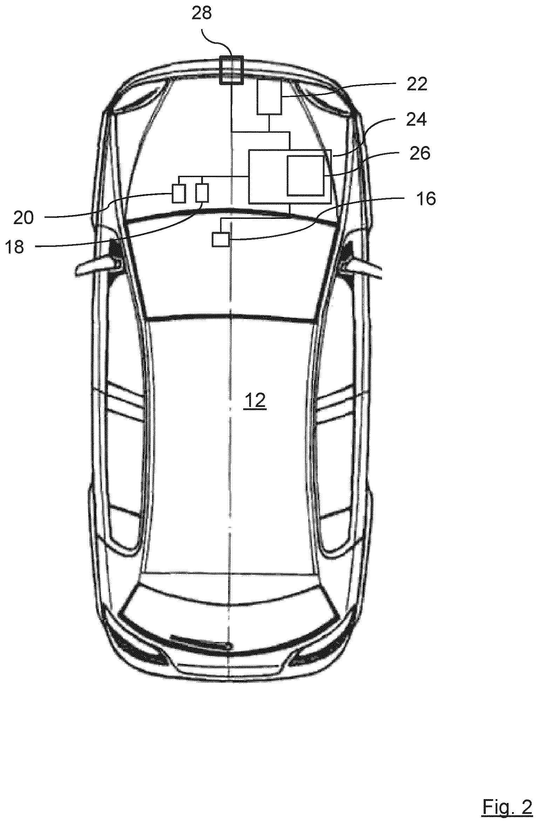

Fig. 2 zeigt das Kraftfahrzeug 12.

Das Kraftfahrzeug 12 weist eine Recheneinheit 24 mit einem Speicher 26 auf, wobei in dem Speicher 26 ein Computerprogrammprodukt gespeichert ist, dass das in dem Ausführungsbeispiel beschriebene Verfahren umgesetzt.

Die Recheneinheit 24 ist mit der Sende-Empfangs-Einheit 22 verbunden, über die mittels des dem Kraftfahrzeug-zu-Kraftfahrzeug-Netzwerks 14 mit zumindest dem autonom fahrenden Kraftfahrzeug 4 kommuniziert werden kann.

Die Recheneinheit 24 ist des Weiteren mit dem Gaspedalsensor 18 und dem Bremspedalsensor 20 verbunden.

Die Recheneinheit 24 steuert darüber hinaus die Anzeige 16.

Am vorderen Ende sowie am hinteren Ende des Kraftfahrzeugs 12 ist wenigstens ein Abstandssensor 30 angeordnet, mithilfe derer die Zeitabstände th, tv gemessen werden können.

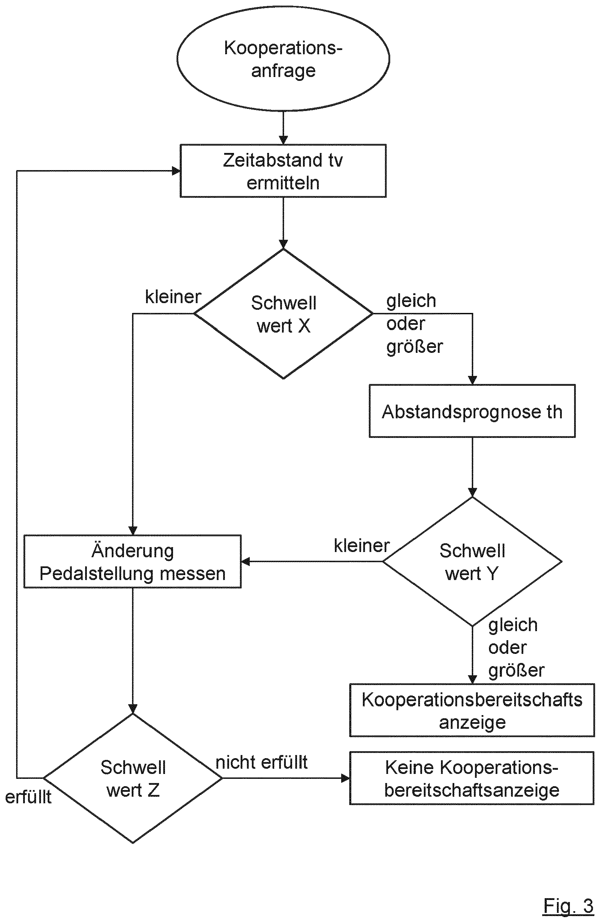

Fig. 3 zeigt ein Ablaufdiagramm des Verfahrens.

Zunächst wird eine Kooperationsanfrage des autonom fahrenden Kraftfahrzeugs 4 an das hinten fahrende Kraftfahrzeug 12 gesendet.

Sodann wird ein Zeitabstand tv zwischen dem hinten fahrenden Kraftfahrzeug 12 und dem vorne fahrenden Kraftfahrzeug 10 gemessen. Ist der Zeitabstand th größer als ein Schwellwert X, wird eine Abstandsprognose vorgenommen, mithilfe derer festgestellt wird, ob ein Zeitabstand th zwischen dem Kraftfahrzeug 12 und dem autonom fahrenden Kraftfahrzeug 4 zum Zeitpunkt des vollzogenen Einfädelns des autonom fahrenden Kraftfahrzeugs 4 größer oder kleiner sein wird als ein Schwellwert Y.

Der Schwellwert X ergibt sich im Wesentlichen aus dem doppelten des Schwellwerts Y zuzüglich einer Fahrzeuglänge l des autonom fahrenden Kraftfahrzeugs 4, also: X = 2*Y+l.

Ergibt die Abstandsprognose, dass der Zeitabstand th zum vermutlichen Zeitpunkt des erfolgten Spurwechsels des autonom fahrenden Kraftfahrzeugs 4 gleich oder größer dem Schwellwert Y sein wird, wird eine Kooperationsbereitschaftsanzeige vom Kraftfahrzeug 12 gesendet und der Spurwechsel kann vom autonom fahrenden Kraftfahrzeug 4 vollzogen werden.

Wird festgestellt, dass der Zeitabstand tv kleiner ist als der Schwellwert X oder wird bei der Abstandsprognose ermittelt, dass der Zeitabstand th zum Zeitpunkt des erfolgten Spurwechsels des autonom fahrenden Kraftfahrzeugs 4 kleiner sein wird als der Schwellwert Y, wird eine Änderung der Pedalstellung des Gaspedals mithilfe des Gaspedalsensors 18 durch das hinten fahrenden Kraftfahrzeugs 12 gemessen.

Ergibt die Messung der Stellung des Gaspedals, dass ein Schwellwert Z nicht erfüllt ist, wird nicht von Kooperationsbereitschaft ausgegangen. Der Schwellwert Z ist dadurch bestimmt, dass die Änderung der Pedalstellung von Gaspedal und/oder Bremspedal dazu führen wird, dass zum Zeitpunkt des vollzogenen Fahrmanövers des autonom fahrenden Kraftfahrzeugs 4 der Schwellwert Y erreicht sein wird. Ergibt die Messung hingegen, dass der Schwellwert Z erreicht ist, wird wieder mit der Messung des Zeitabstandes th begonnen und das Verfahren ab diesem Verfahrensschritt erneut durchgeführt.

Obwohl der Gegenstand im Detail durch Ausführungsbeispiele näher illustriert und erläutert wurde, so ist die Erfindung nicht durch die offenbarten Beispiele eingeschränkt und andere Variationen können vom Fachmann hieraus abgeleitet werden. Es ist daher klar, dass eine Vielzahl von Variationsmöglichkeiten existiert. Es ist ebenfalls klar, dass beispielhaft genannte Ausführungsformen nur Beispiele darstellen, die nicht in irgendeiner Weise als Begrenzung etwa des Schutzbereichs, der Anwendungsmöglichkeiten oder der Konfiguration der Erfindung aufzufassen sind. Vielmehr versetzen die vorhergehende Beschreibung und die Figurenbeschreibung den Fachmann in die Lage, die beispielhaften Ausführungsformen konkret umzusetzen, wobei der Fachmann in Kenntnis des offenbarten Erfindungsgedankens vielfältige Änderungen beispielsweise hinsichtlich der Funktion oder der Anordnung einzelner, in einer beispielhaften Ausführungsform genannter Elemente vornehmen kann, ohne den Schutzbereich zu verlassen, der durch die Ansprüche definiert wird.

### Bezugszeichenliste

- 2: Straße
- 4: Autonom fahrendes Kraftfahrzeug
- 6: Ausgangsspur
- 8: Zielspur
- 10: vorne fahrendes Kraftfahrzeug
- 12: hinten fahrendes Kraftfahrzeug
- 13: Sende-Empfangs-Einheit
- 14: Kraftfahrzeug-zu-Kraftfahrzeug-Netzwerk
- 16: Anzeige
- 18: Gaspedalsensor
- 20: Bremspedalsensor
- 22: Sende-Empfangs-Einheit
- 24: Recheneinheit
- 26: Speicher
- 28: Abstandssensor

- I: Länge des autonom fahrenden Kraftfahrzeugs
- th: Zeitabstand zum autonom fahrenden Kraftfahrzeug
- tv: Zeitabstand zum vorne fahrenden Kraftfahrzeug
- v: Geschwindigkeit
- X: Schwellwert Abstand vorne fahrendes Kraftfahrzeug
- Y: Schwellwert Abstand autonom fahrendes Kraftfahrzeug
- Z: Schwellwert Pedalstellung

## Patentansprüche

1. Verfahren zur Übermittlung einer Kooperationsbereitschaftsanzeige eines manuell gefahrenen Kraftfahrzeugs (12) an ein autonom fahrendes Kraftfahrzeug (4), wobei das manuell gefahrene Kraftfahrzeug (12) nach Empfangen einer vom autonom fahrenden Kraftfahrzeug (4) über ein Kraftfahrzeug-zu-Kraftfahrzeug-Netzwerk (14) gesendeten Kooperationsanfrage in einem ersten Schritt einen ersten Zeitabstand (tv) zwischen dem manuell gefahrenen Kraftfahrzeug (12) und einem vorausfahrenden Kraftfahrzeug (10) ermittelt und, sofern der erste Zeitabstand (tv) gleich oder größer als ein erster Schwellwert (X) ist, in einem zweiten Schritt einen zweiten Zeitabstand (th) zum autonom fahrenden Kraftfahrzeug (4) zu einem zu erwartenden Zeitpunkt des vollzogenen Fahrmanövers des autonom fahrenden Kraftfahrzeugs (4) prognostiziert, wobei das manuell gefahrene Kraftfahrzeug (12) die Kooperationsbereitschaftsanzeige über das Kraftfahrzeug-zu-Kraftfahrzeug-Netzwerk (14) an das autonom fahrende Kraftfahrzeug (4) sendet, wenn der zweite Zeitabstand (th) gleich oder größer als ein zweiter Schwellwert (Y) ist.

2. Verfahren nach Anspruch 1, wobei der zweite Schwellwert (Y) über ein individuelles Fahrprofil des manuell gefahrenen Kraftfahrzeugs (12) bestimmt wird, in dem während eines zeitlich vorausgegangenen Fahrverlaufs erfasste und gemittelte Zeitabstände zur vorausfahrenden Fahrzeugen berücksichtigt werden.

3. Verfahren nach Anspruch 1 oder 2, wobei der erste Schwellwert (X) sich aus dem zweifachen des zweiten Schwellwerts (Y) zuzüglich einer Fahrzeuglänge (I) des autonom fahrenden Kraftfahrzeugs (4) ergibt.

4. Verfahren nach einem der vorangegangenen Ansprüche, wobei, wenn der zweite Zeitabstand (th) und/oder der erste Zeitabstand (tv) kleiner als einer der jeweiligen erste oder zweite Schwellwert (X, Y) ist, eine Gaspedalstellung und/oder Bremspedalstellung des manuell gefahrenen Kraftfahrzeugs (12) gemessen wird, wobei das manuell gefahrene Kraftfahrzeug (12) bei kleiner werdender Gaspedalstellung und/oder Betätigung des Bremspedals des hinten fahrenden Kraftfahrzeugs (12) jenseits eines dritten Schwellwerts (Z) das Verfahren ab dem ersten Schritt erneut durchführt.

5. Verfahren nach einem der vorangegangenen Ansprüche, wobei die Kooperationsanfrage des autonom fahrenden Kraftfahrzeugs (4) im manuell gefahrenen Kraftfahrzeug (12) signalisiert wird.

6. Verfahren nach einem der vorangegangenen Ansprüche, wobei es sich bei dem Fahrmanöver um einen Spurwechsel des autonom fahrenden Kraftfahrzeugs (4) von einer Ausgangsspur (6) zu einer Zielspur (8) handelt, wobei das manuell gefahrene Kraftfahrzeug (12) sich schräg hinter dem autonom fahrenden Kraftfahrzeug (4) auf der Zielspur (8) befindet.

7. Verfahren nach einem der vorangegangenen Ansprüche, wobei es sich bei dem Fahrmanöver um ein Einmünden des autonom fahrenden Kraftfahrzeugs (4) in eine Kreuzung oder einen Kreisverkehr handelt, wobei das manuell gefahrene Kraftfahrzeug (12) sich auf der Zielstraße oder in dem Kreisverkehr befindet.

8. Verfahren nach einem der vorangegangenen Ansprüche, wobei die jeweiligen Schwellwerte (X, Y, Z) geschwindigkeitsabhängig sind.

9. Verfahren nach einem der vorangegangenen Ansprüche, wobei das manuell gefahrene Kraftfahrzeug (12) einen Knopf aufweist, um die Kooperationsbereitschaftsanzeige zu senden.

10. Computerprogrammprodukt, mit einem computerlesbaren Speichermedium (26), auf dem Befehle eingebettet sind, die, wenn sie von einer Recheneinheit (24) ausgeführt werden, bewirken, dass die Recheneinheit (24) dazu eingerichtet ist, das Verfahren nach einem der vorangegangenen Ansprüche auszuführen.

11. Kraftfahrzeug (12) mit einer Recheneinheit (24) und einem computerlesbaren Speichermedium (26), wobei auf dem Speichermedium (26) ein Computerprogrammprodukt nach Anspruch 10 gespeichert ist.

## Claims

1. Procedures for transmitting a willingness to cooperate notification of a manually driven motor vehicle (12) to an autonomous motor vehicle (4), whereby the manually driven motor vehicle (12), after receiving a request for cooperation sent by the autonomous motor vehicle (4) via a network of motor vehicles to motor vehicles (14), takes the first step of an initial distance (tv) between the manually driven motor vehicle (12) and a forward motor vehicle (10), and, if the first time interval (tv) is equal to or greater than a first threshold value (X), a second time interval (th) to the autonomous motor vehicle (4) at an expected time of maneuvering of the autonomous motor vehicle (4), with the manually driven vehicle (12) forecasting the cooperation the readiness indicator to be transmitted to the autonomous motor vehicle (4) via the motor vehicle-to-motor network (14) if the second time interval (th) is equal to or greater than a second threshold (Y).

2. Procedure according to claim 1, where the second threshold value (Y) is determined by an individual running profile of the manually driven vehicle (12), taking into account recorded and averaged intervals of time with the preceding vehicle during a previous driving period.

3. Procedures according to claim 1 or 2, the first threshold (X) being two times the second threshold (Y) plus a vehicle length (l) of the autonomous motor vehicle (4).

4. Method according to one of the previous requirements, where, if the second time interval (th) and/or the first time interval (tv) is less than one of the respective first or second threshold values (X, Y), a gas pedal position and/or brake pedal position of the manually operated motor vehicle (12) is measured, the manually driven motor vehicle (12) being measured when the accelerator position is decreasing and/or applied; of the brake pedal of the rear-moving motor vehicle (12) beyond a third threshold value (Z), re-perform the procedure from the first step.

5. Procedure according to one of the previous claims, signaling the request for cooperation of the autonomous motor vehicle (4) in the manually driven motor vehicle (12).

6. Procedures according to one of the previous requirements, the maneuver being a change of track of the autonomous motor vehicle (4) from a starting lane (6) to a target lane (8), the manually driven motor vehicle (12) being diagonally situated behind the autonomous motor vehicle (4) on the target lane (8).

7. Proceed according to one of the previous claims, the maneuver being an unwinding of the autonomous motor vehicle (4) into a intersection or a roundabout, where the manually driven motor vehicle (12) is on the final road or in the roundabout.

8. Procedure according to one of the previous claims, with the respective threshold values (X, Y, Z) depending on the speed.

9. Procedures according to one of the previous requirements, with the manually operated motor vehicle (12) having a button to send the cooperation readiness indicator.

10. Computer program product, with a computer-readable storage medium (26), which embeds commands that, when executed by a unit of account (24), cause the unit of account (24) to execute the procedure according to one of the previous requirements.

11. Motor vehicle (12) with a computer unit (24) and a computer-readable storage medium (26), where the storage medium (26) contains a computer program product according to claim 10.

## Revendications

1. Procédé de transmission d'une indication de l'état de préparation de la coopération d'un véhicule automobile (12) à conduite manuelle à un véhicule automobile (4) à conduite autonome, le véhicule automobile (12) à conduite manuelle présentant, dans une première étape, un premier intervalle de temps après réception d'une demande de coopération envoyée par un véhicule automobile (4) à conduite autonome par l'intermédiaire d'un réseau de véhicule automobile à véhicule automobile (14) (tv) est déterminée entre le véhicule à moteur (12) à conduite manuelle (12) et un véhicule à moteur (10) en marche avant et, si le premier intervalle de temps (tv) est égal ou supérieur à un premier seuil (X), dans une deuxième étape, un second intervalle de temps (th) par rapport au véhicule (4) à conduite autonome à un moment prévisible de la manoeuvre du véhicule à conduite autonome Véhicule automobile (4) selon les pronostics, le véhicule automobile (12) à conduite manuelle envoyant l'indication d'attente de coopération au véhicule automobile (4) par l'intermédiaire du réseau (14) de véhicule automobile à véhicule automobile lorsque le second intervalle de temps (th) est égal ou supérieur à un second seuil (Y).

2. Procédé selon la revendication 1, dans lequel le second seuil (Y) est déterminé par un profil de déplacement individuel du véhicule automobile à conduite manuelle (12), dans lequel des intervalles de temps détectés et moyennés sont pris en compte par rapport au véhicule précédent au cours d'un parcours de déplacement antérieur.

3. Procédé selon la revendication 1 ou 2, dans lequel le premier seuil (X) est égal au double du deuxième seuil (Y) plus une longueur de véhicule (1) du véhicule automobile (4) qui fonctionne de manière autonome.

4. Procédé selon l'une quelconque des revendications précédentes, dans lequel, lorsque le second intervalle de temps (th) et/ou le premier intervalle de temps (tv) est inférieur à l'une des première ou deuxième valeurs de seuil (X, Y) respectives, une position de pédale d'accélérateur et/ou de pédale de frein du véhicule automobile (12) à conduite manuelle est mesurée, le véhicule automobile (12) à conduite manuelle étant plus petit La position de la pédale d'accélérateur et/ou l'actionnement de la pédale de frein du véhicule automobile (12) à l'arrière au-delà d'une troisième valeur seuil (Z), reconduit le procédé à partir de la première étape.

5. Procédé selon l'une quelconque des revendications précédentes, dans lequel la demande de coopération du véhicule automobile (4) conduisant de manière autonome est signalée dans le véhicule automobile (12) à conduite manuelle.

6. Procédé selon l'une quelconque des revendications précédentes, dans lequel la manoeuvre de déplacement est un changement de voie du véhicule automobile (4) qui se déplace de manière autonome d'une piste de sortie (6) à une piste cible (8), le véhicule automobile (12) qui se déplace manuellement étant situé obliquement derrière le véhicule automobile (4) qui se déplace de manière autonome sur la piste cible (8).

7. Procédé selon l'une quelconque des revendications précédentes, dans lequel la manoeuvre de conduite est une entrée du véhicule automobile (4) qui conduit de manière autonome dans un croisement ou un rond-point, le véhicule automobile (12) qui est conduit manuellement étant sur la route de destination ou dans le rond-point.

8. Procédé selon l'une quelconque des revendications précédentes, dans lequel les valeurs de seuil respectives (X, Y, Z) dépendent de la vitesse.

9. Procédé selon l'une quelconque des revendications précédentes, dans lequel le véhicule automobile (12) à conduite manuelle comprend un bouton pour envoyer l'indication d'attente de coopération.

10. Produit de programme informatique comprenant un support de stockage lisible par ordinateur (26) sur lequel sont incorporées des instructions qui, lorsqu'elles sont exécutées par une unité de calcul (24), font que l'unité de calcul (24) est agencée pour exécuter le procédé selon l'une quelconque des revendications précédentes.

11. Véhicule automobile (12) comprenant une unité de calcul (24) et un support de stockage lisible par ordinateur (26), dans lequel un produit de programme informatique selon la revendication 10 est stocké sur le support de stockage (26).
